# EUROPÄISCHE PATENTANMELDUNG

(11) **EP 0 968 817 A2**
(43) Veröffentlichungstag der Anmeldung: **05.01.2000**
(21) Anmeldenummer: 99111880.3
(22) Anmeldetag: 21.06.1999
(51) Int. Cl.: B32B 27/32

(54) **Thermoformbare Verbundfolie**

(30) Priorität: 29.06.1998 DE 19828866
(71) Anmelder: Ticona GmbH, 65451 Kelsterbach (DE)
(72) Erfinder: Beer, Ekkehard, Dr., 65307 Bad Schwalbach (DE); Hatke, Wilfried, Dr., 65719 Hofheim (DE)

(57) **Zusammenfassung**

Die vorliegende Erfindung betrifft eine thermoformbare Verbundfolie, enthaltend mindestens eine Cycloolefincopolymer enthaltende Folie und mindestens auf einer Seite darauf lamenierten thermoplastischen Folie. Die thermoformbare Folie ist erhältlich in dem die auf der Cycloolefincopolymer enthaltenden Folie lamenierte thermoplastische Folie mittels eines lösungsmittelfreien Einkomponentenklebers aufgebracht wird. Die lamenierte Folie ist eine PVC enthaltende thermoplastische Folie. Die Dicke der Gesamtfolie beträgt von 100 µm bis 500 µm, die Dicke der PVC-Folie beträgt von 5 µm bis 150 µm und die Dicke der COC-Folie beträgt von 50 µm bis 400 µm. Die thermoformbare Verbundfolie wird zur Herstellung von Blisterverpackungen verwendet.

## Beschreibung

Die vorliegende Erfindung betrifft eine thermoformbare Verbundfolie, ein Verfahren zur Herstellung einer thermoformbaren Verbundfolie und deren Verwendung als Verpackungsmaterial.

Zur Herstellung von Verpackungen mit hohen Anforderungen werden flexible Folien unter Einwirkung von Wärme und Druck mit mechanischem Stempel bei Über- und/oder Unterdruck schalen- oder napfartig geformt. Die Folie dient zuerst als Schutz des Füllgutes. Die Folie muß das Füllgut vor Umwelteinflüssen schützen. Die Folie muß daher eine hohe Wasserdampf-, Gas- und UV-Barriere aufweisen. Die Folie muß eine mechanische Stabilität aufweisen, um das Füllgut vor physischen Einflüssen zu schützen und um nicht selbst vom Füllgut beschädigt zu werden. Das Füllgut darf durch Abgabe von Eigenbestandteilen der Folie nicht beeinträchtigen.

Als Verpackung für verschiedenste Gegenstände werden immer häufiger Blisterverpackungen gewählt, da diese Verpackungsform vielfältige Gestaltungsmöglichkeiten bietet und einem mechanisierten Verpackungsprozess entgegen kommt. Ausgangsmaterial für eine Blisterverpackung ist eine thermisch verformbare Folie. Es handelt sich dabei um Kunststoffolien, die durch Erwärmen in einen Zustand gebracht werden in welchem sie sich relativ leicht durch Anwendung von pneumatischem Über- oder Unterdruck oder durch Stempel verformen lassen. Durch geeignete Wahl der Formwerkzeuge lassen sich so Vertiefungen (Blister) in die Folie (Bodenfolie) einbringen, die der Gestalt des zu verpackenden Gegenstandes angepaßt werden können. Nach diesem Verformungsschritt wird der zu verpackende Gegenstand in den entstandenen Blister eingebracht. Nach dem Befüllen des Blisters wird auf die Bodenfolie eine Abdeckfolie aufgebracht, die den zu verpackenden Gegenstand in seinem Blister einschließt.

Die Erforderlichen Eigenschaften einer Folie werden durch verbinden von mehr als einer Folie zu einer Verbundfolie erreicht, wenn die Gesamtanforderungen durch ein Material nicht abgedeckt werden können. Folien hergestellt aus Cycloolefincopolymeren weisen eine sehr gute Wasserdampfdichte auf. Diese Folien weisen aber eine schlechte Fettbeständigkeit auf. Es kommt zur Bildung von Spannungsrißkorrosion durch die Einwirkung von ungesättigten Fettsäuren.

Die am häufigsten verwendete Folie in Blisterverpackungen ist Polyvinylchlorid (PVC). Zur Erhöhung der Barrierewirkung gegen Gase, insbesondere Wasserdampf wird die PVC Bodenfolie häufig mit PVDC beschichtet. Folien aus unorientierten Polypropylen (uPP) bieten eine bessere Wasserdampfsperrwirkung als PVC-Folien und sind unter ökologischen Gesichtspunkten unbedenklicher. Der Nachteil ist jedoch die schlechtere Tiefziehbarkeit und der höhere Schrumpf dieses Materials.

Die in EP-A-570 188 und EP-A-631 864 beschriebenen COC Mono- oder Multischichtfolien als Bodenfolie ermöglichen gute Verarbeitung und gute Barriereeigenschaften.

Neuere Entwicklungen auf dem Gebiet der Blisterverpackungen für Arzneimittel beschreiben die Verwendung von amorphen Polyolefinen, die sich durch gutes Verarbeitungsverhalten und hohe Barrieren gegen Wasserdampf auszeichnen. So beschreiben EP-A-570 188 und EP-A-631 864 die Verwendung von Polyolefinen mit cyclischen Olefinen als Polymerbaustein. In diesen Anmeldungen wird die Verwendung dieser Polyolefine (Cycloolefincopolymere oder abgekürzt COC) in Form von Mono- oder Multischichtfolien für Blisterverpackungen beschrieben.

Die Blisterverpackung bietet neben der automatisierten Verpackung und Präsentation des im Blister geschützten Produktes, wie Arzneimitteln in Form von Tabletten, Kapseln oder ähnlichem die Möglichkeit das Einwirken von Luftfeuchtigkeit und Sauerstoff wesentlich zu reduzieren und so die Lagerzeiten zu erhöhen.

Aufgabe der vorliegende Erfindung ist es, eine Verbundfolie mit hohen Barriereeigenschaften, sehr gutem Tiefziehverhalten und guter Fettbeständigkeit und ein wirtschaftliches und umweltschonendes Verfahren zu deren Herstellung sowie deren Verwendung zur Herstellung von Blisterverpackungen bereitzustellen.

Die Aufgabe der vorliegenden Erfindung wird gelöst durch eine thermoformbare Verbundfolie, enthaltend mindestens eine Cycloolefincopolymer enthaltende Folie und mindestens auf einer Seite darauf lamenierte thermoplastische PVC-Folie.

Die Folie weist bei einer relativen Feuchte von etwa 85% und einer Temperatur von etwa 23 °C eine Wasserdampfpermeation von ≤ 0,05 g/m²d, eine Durchstoßfestigkeit von≤ 20 N und eine Dicke von ≤ 100 µm auf.

Die im Sinne der Erfindung geeigneten Folien enthalten mindestens ein Cycloolefinpolymer ausgewählt aus Polymeren enthaltend 0,1 - 100 Gew.-%, bevorzugt 10 - 90 Gew.-%, bezogen auf die Gesamtmasse des Cycloolefinpolymers, polymerisierte Einheiten mindestens eines cyclischen Olefins der Formeln I, II, II', III, IV, V oder VI 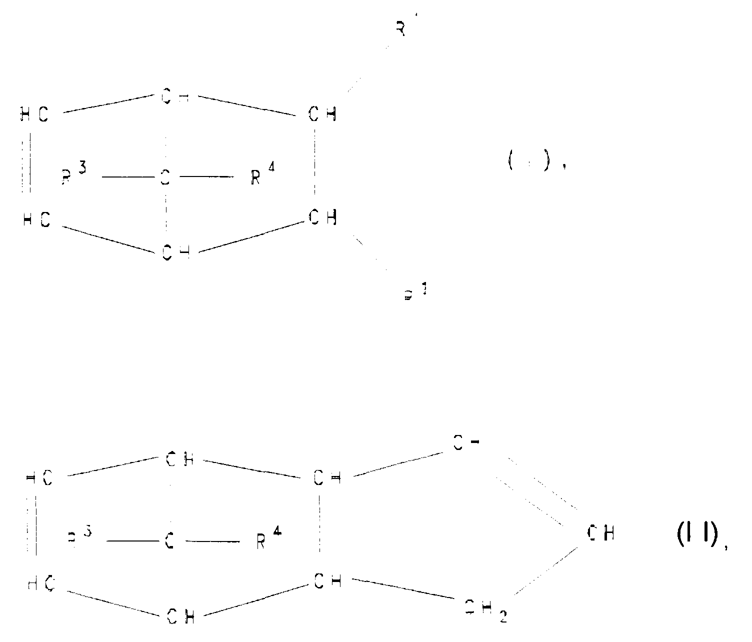 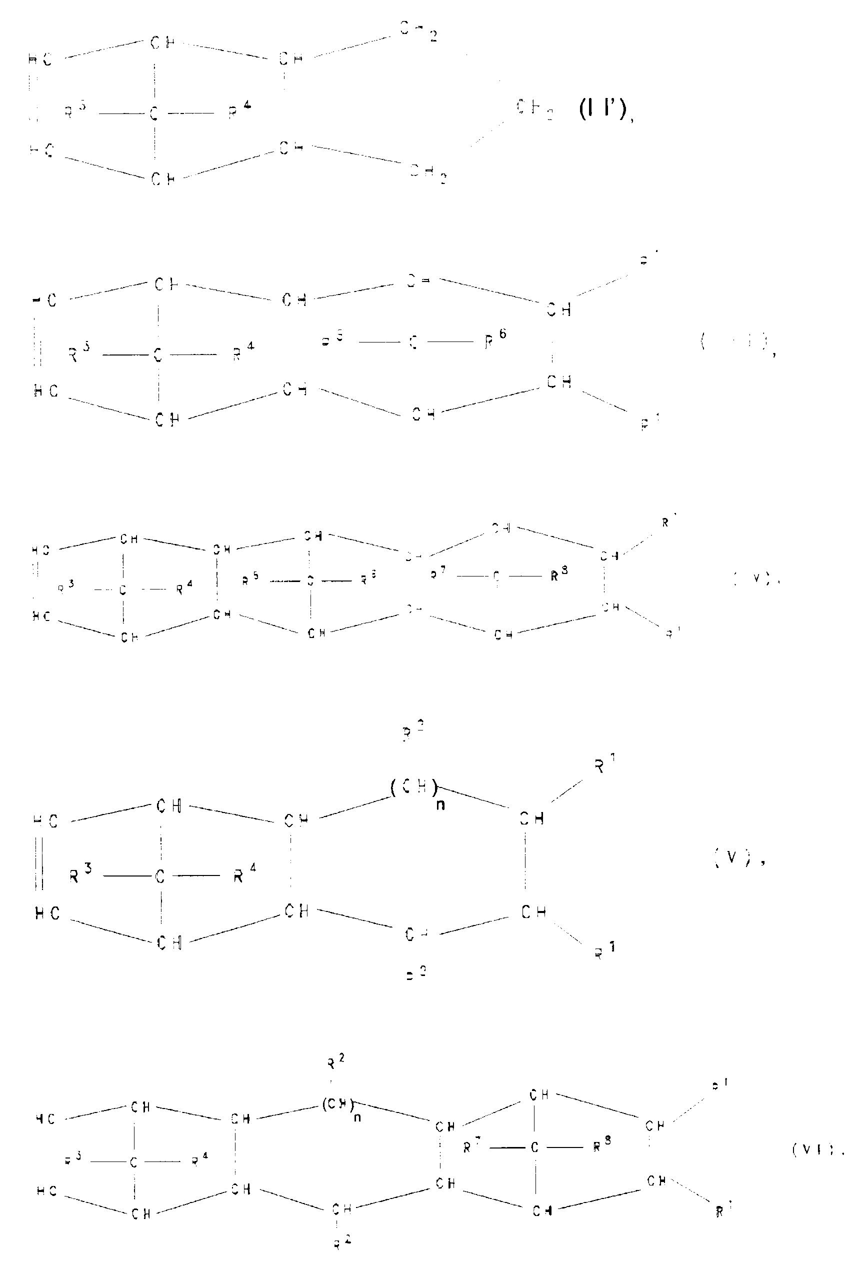 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest,
einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und
0 bis 99,9 mol-%, bezogen auf die Gesamtzusammensetzung des Cycloolefincopolymers, polymerisierte Einheiten, welche sich ableiten von einem oder mehreren acyclischen Olefinen der Formel VII 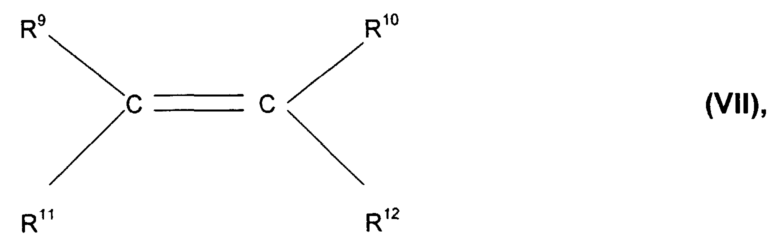 worin R⁹, R¹⁰ , R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈-Arylrest bedeuten.

Die Cycloolefincopolymere können auch durch ringöffnende Polymerisation mindestens eines der Monomere mit den Formeln I bis VI und anschließender Hydrierung der erhaltenen Produkte erhalten werden.

Außerdem kann das erfindungsgemäße elastomeren Cycloolefincopolymer 0 bis 45 mol-%, bezogen auf die Gesamtzusammensetzung des Cycloolefincopolymers, polymerisierte Einheiten enthalten, welche sich ableiten von einem oder mehreren monocyclischen Olefinen der Formel VIII 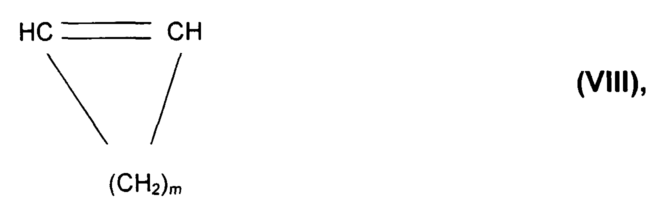 worin meine Zahl von 2 bis 10 ist.

Der Anteil der polymerisierten Einheiten, die sich ableiten von cyclischen, insbesondere polycyclischen Olefinen beträgt bevorzugt 3 bis 75 mol-% bezogen auf die Gesamtzusammensetzung des Cycloolefincopolymers. Der Anteil der polymerisierten Einheiten, die sich ableiten von acyclischen Olefinen beträgt bevorzugt 5 bis 80 mol% bezogen auf die Gesamtzusammensetzung des Cycloolefincopolymers.

Bevorzugt bestehen die Cycloolefincopolymere aus polymerisierten Einheiten, die sich ableiten von einem oder mehreren polycyclischen Olefinen, insbesondere polycyclischen Olefinen der Formeln I oder III, und polymerisierten Einheiten, die sich ableiten von einem oder mehreren acyclischen Olefinen der Formel VII, insbesondere α-Olefinen mit 2 bis 20 C-Atomen. Insbesondere sind Cycloolefincopolymere bevorzugt, die aus polymerisierten Einheiten bestehen, die sich ableiten von einem polycyclischen Olefin der Formel I oder III und einem acyclischen Olefin der Formel VII. Weiterhin bevorzugt sind Terpolymere, die aus polymerisierten Einheiten bestehen, die sich ableiten von einem polycyclischen Monoolefin der Formel I oder III, einem acyclischen Monoolefin der Formel VII und einem cyclischen oder acyclischen Olefin, welches mindestens zwei Doppelbindungen enthält (Polyen), insbesondere cyclische, bevorzugt polycyclische Diene wie Norbornadien oder cyclische, besonders bevorzugt polycyclische Alkene, die einen C₂-C₂₀-Alkenylrest tragen wie Vinylnorbornen.

Bevorzugt enthalten die erfindungsgemäßen elastomeren Cycloolefancopolymere Olefine mit Norbornengrundstruktur, besonders bevorzugt Norbornen, Tetracyclododecen und gegebenenfalls Vinylnorbornen oder Norbornadien. Bevorzugt sind auch Cycloolefincopolymere, die polymerisierte Einheiten enthalten, die sich ableiten von acyclischen Olefinen mit endständigen Doppelbindungen wie α-Olefinen mit 2 bis 20 C-Atomen, besonders bevorzugt Ethylen oder Propylen. Besonders bevorzugt sind Norbornen/Ethylen- und Tetracyclododecen/Ethylen-Copolymere.

Bei den Terpolymeren sind besonders bevorzugt Norbornen/Vinylnorbonen/ Ethylen-, Norbornen/Norbornadien/Ethylen-, Tetracyclododecen/Vinylnorbornen/ Ethylen-, Tetracyclododecen/Vinyltetracyclododecen/Ethylen-Terpolymere. Der Anteil der polymerisierten Einheiten, die sich ableiten von einem Polyen, bevorzugt Vinylnorbornen oder Norbornadien, liegt bei 0,1 bis 50 mol-%, vorzugsweise bei 0,1 bis 20 mol-%, der Anteil des acyclischen Monoolefins der Formel VII beträgt 0 bis 99,9 mol-%, bevorzugt 5 bis 80 mol-%, bezogen auf die Gesamtzusammensetzung des Cycloolefincopolymers. In den beschriebenen Terpolymeren liegt der Anteil des polycyclischen Monoolefins bei 0,1 bis 99,9 mol-%, bevorzugt 3 bis 75 mol-%, bezogen auf die Gesamtzusammensetzung des Cycloolefincopolymers.

Das erfindungsgemäße Cycloolefincopolymer enthält vorzugsweise mindestens ein Cycloolefincopolymer, welches polymerisierte Einheiten enthält, die sich ableiten lassen von polycyclischen Olefinen der Formel I, und polymerisierte Einheiten, die sich ableiten lassen von acyclischen Olefinen der Formel VII.

Die erfindungsgemäßen Cycloolefincopolymere können hergestellt werden bei Temperaturen von -78 bis 200 °C und einem Druck von 0,01 bis 200 bar, in Gegenwart eines oder mehrerer Katalysatorsysteme, welche mindestens eine Übergangsmetallverbindung und gegebenenfalls einen Cokatalysator und gegebenenfalls ein Trägermaterial enthalten. Als Übergangsmetallverbindungen eignen sich Metallocene, insbesondere stereorigide Metallocene. Beispiele für Katalysatorsysteme, welche für die Herstellung der erfindungsgemäßen elastomeren Cycloolefincopolymere geeignet sind, sind beschrieben in EP-A-407 870, EP-A-485 893 und EP-A-503 422. Auf diese Referenzen wird hier ausdrücklich bezug genommen.

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cyclopentadienyl)-zirkondichlorid,
Bis(1-indenyl)-zirkondichlorid,
Diphenylmethylen-(9-fluorenyl)-cyclopentadienylzirkondichlorid,
Isopropylen-(9-fluorenyl)-cyclopentadienyl-zirkondichlorid,
rac-Isopropyliden-bis-(1-indenyl)zirkondichlorid,
Phenylmethylmethylen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-fluorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
Isopropylen-(methylcyclopentadienyl)-(1-indenyl)-zirkondichlorid, 4-(η⁵-cyclopentadienyl)-4,7,7-trimethyl-(η⁵-4,5,6,7-tetrahydroindenyl-zirkondichlorid,
[4-(η⁵-cyclopentadienyl)-4,7,7-triphenyl-(η⁵-4,5,6,7-tetrahydroindenyl)]zirkondichlorid,
[4-(η⁵-cyclopentadienyl)-4,7-dimethyl-7-phenyl-(η⁵-4,5,6,7-tetrahydroindenyl)]zirkondichlorid,
[4-(η⁵-3'-tert.-butylcyclopentadienyl)-4,7,7-triphenyl-(η⁵-4,5,6,7-tetrahydroindenyl)]zirkondichlorid,
[4-(η⁵-3'-tert.-butylcyclopentadienyl)-4,7-dimethyl-7-phenyl-(η⁵-4,5,6,7-tetrahydroindenyl)]zirkondichlorid,
[4-(η⁵-3'-methylcyclopentadienyl)-4,7,7-trimethyl-(η⁵-4,5,6,7-tetrahydroindenyl]zirkondichlorid,
[4-(η⁵-3'-methylcyclopentadienyl)-4,7,7-triphenyl-(η⁵-4,5,6,7-tetrahydroindenyl)]zirkondichlorid,
[4-(η⁵-3'-methylcyclopentadienyl)-4,7-dimethyl-7-phenyl-(η⁵-4,5,6,7-tetrahydroindenyl)]zirkondichlorid,
[4-(η⁵-3'-isopropylcyclopentadienyl)-4,7,7-trimethyl-(η⁵-4,5,6,7-tetrahydroindenyl)]zirkondichiorid,
[4-(η⁵-3'-isoproplycyclopentadienyl)-4,7,7-triphenyl-(η⁵-4,5,6,7-tetrahydroindenyl)]zirkondichlorid,
[4-(η⁵-3'-isopropylcyclopentadienyl)-4,7-dimethyl-7-phenyl-(η⁵-4,5,6,7-tetrahydroindenyl)]zirkondichlorid,
[4-(η⁵-cyclopentadienyl)(η ⁵-4,5-tetrahydropentalen)]zirkondichlorid,
[4-(η⁵-cyclopentadienyl)-4-methyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid,
[4-(η⁵-3'-methyl-cyclopentadienyl)(η⁵-4,5-tetrahydropentalen)]zirkondichlorid,
[4-(η⁵-3'-isopropylcyclopentadienyl)(η⁵-4,5-tetrahydropentalen)]zirkondichlorid,
[4-(η⁵-3'-benzyl-cyclopentadienyl)(η⁵-4,5-tetrahydropentalen)]zirkondichlorid,
[2,2,4Trimethyl-4-(η⁵-cyclopentadienyl)-(η⁵-4,5-tetrahydropentalen)]-zirkoniumdichlorid,
[2,2,4Trimethyl-4-(η⁵-(3,4-Di-isopropyl)cyclopentadienyl)-(η⁵-4,5-tetrahydropentalen)]-zirkoniumdichlorid.

Die erfindungsgemäß verwendeten COC-Folien zeichnen sich durch spezielle mechanische Eigenschaften aus. Die Folien können auf den verwendeten Maschinen verarbeitet werden und besitzen gleichzeitig eine geringe Durchstoßfestigkeit und eine hohe Barriere, vor allem gegen Wasserdampf. Diese COC-Folien, sind in geeigneter Weise unorientiert. Dabei kann es sich um Mono- oder Mehrschichtfolien handeln. Die Folien können organische oder anorganische Füllstoffe enthalten, um die Lichtdurchlässigkeit zu verringern damit das Füllgut nicht sichtbar zu machen (kindersichere Verpackung) oder die Bedruckbarkeit oder die Siegeleigenschaften zu verbessern.

Die Herstellung der Cycloolefincopolymere geschieht durch eine heterogene oder homogene Katalyse mit metallorganischen Verbindungen und ist in einer Vielzahl von Patenten beschrieben. Katalysatorsysteme basierend auf Mischkatalysatoren aus Titansalzen und Aluminiumorganylen werden in DD-A-109 224 und DD-A-237 070 beschreiben. EP-A-156 464 beschreibt die Herstellung mit Katalysatoren auf Vanadiumbasis. EP-A-283 164, EP-A-407 870, EP-A-485 893 und EP-A-503 422 beschreiben die Herstellung von Cycloolefinpolymeren mit Katalysatoren basierend auf löslichen Metallocenkomplexen. Auf die in diesen Patenten zur Herstellung von COC beschriebenen Herstellungsverfahren und verwendeten Katalysatorsysteme wird hiermit ausdrücklich hingewiesen.

Extrudierte nicht orientierte COC-Folien sind spröde und lassen sich unter erschwerten Bedingungen nur sehr schlecht weiterverarbeiten, vgl. DE-A-4304309. So neigen sie dazu beim Aufwickeln bzw. Abwickeln unter Zug leicht einzureißen oder zu zerreißen. Aus diesem Grund muß die mechanische Festigkeit erhöht werden. Dies kann durch Orientieren (mono- oder biaxiale Reckung) der Folien geschehen. Die so orientierten Folien lassen sich wesentlich besser handhaben, ohne daß sie die geschilderten Nachteile aufweisen wie in DE-A-4304309 beschreiben. Die Durchstoßfestigkeit von orientierten Folien wurde nach DIN 53373 untersucht. Als Maß für die Durchstoßfestigkeit kann unter anderem die Durchstoßarbeit herangezogen werden. Es wurde nun festgestellt, daß mit der Orientierung die Durchstoßfestigkeit der Folien zunimmt. Die gemessenen Werte waren ausnahmslos größer als die der nicht orientierten Folien vergleichbarer Dicke. In DE-A-4414669 wird ein Wert von 450 N/mm als zu hoch für einen sinnvollen Einsatz der Folie als Abdeckfolien für Blisterverpackungen angegeben. Auf Blistermaschinen für empfindliche Arzneimittel sollten wesentlich niedrigere Werte angestrebt werden. Als eine erste Orientierung können die Werte der Durchstoßfestigkeiten für Aluminiumfolien herangezogen werden. Die Durchstoßfestigkeit einer Aluminiumfolie (16 µm) liegt bei 90 N/mm. Eine leichte Entnahme der Arzneimittel aus den Blisterverpackungen ist bei Verwendung von orientierten COC-Folien deshalb nicht mehr gewährleistet.

Neben einer optimalen aber nicht zu niedrigen Duchstoßfestigkeit muß die Blisterfolie eine erhöhte Zähigkeit aufweisen. Erst die gezielte Abstimmung von mechanischer Festigkeit (Härte), Flexibilität und erforderlicher Kraft zum Zusammendrücken des Näpfchens ermöglicht es das Füllgut, wie Tablette, Kapsel, Zäpfchen oder Dragee ohne Beschädigung und unnötigen Kraftaufwand aus der Verpackung herauszulösen. Der geringe Kraftaufwand ist insbesondere für die Verwendung bei älteren Menschen sowie im Klinikbereich gefordert, wo das medizinische Personal fortlaufend Tabletten durchdrücken muß und es zu Ermüdungserscheinung und Muskelkater in den Fingern kommen kann.

Die Wasserdampfsperrwirkung der Folien ist vergleichbar mit den Werten wie sie für unverstreckte COC-Folien beobachtet werden. D.h. die Orientierung hat keinen deutlichen Einfluß auf die Barrierewirkung der Folien. Die Dicken der Abdeckfolien auf der Basis von COC-Folien sollten deshalb im Bereich der Dicken der Folien im ausgeformten Blister liegen. Damit ergeben sich Foliendicken für die Abdeckfolien im Bereich von 20 bis 150 µm, bevorzugt im Bereich von 40 bis 100 µm.

Die Wasserdampfsperrwirkung wird durch die Zugabe von organischen oder anorganischen Zusätzen nicht signifikant beeinflußt. Sie liegt im Bereich von 0,2 bis 0,4 g/m²*d für eine Foliendicke von 100 µm. Die Polarität der Oberfläche kann durch eine Koronabehandlung der Folie erhöht werden.

Bei den Zusätzen kann es sich um organische Polymere wie Polypropylen oder Polyethylen als Homo- oder Copolymere, Polyester, Polyamide, Polycarbonat, Polyacetale, Acrylat- und Methacrylatpolymere handeln. Als anorganische Pigmente können Titandioxid, Bariumsulfat, Calciumsulfat, Calciumcarbonat oder Bariumcarbonat eingesetzt werden.

Die COC-Folie kann ein oder beidseitig mit Folie lameniert werden, die Polymere wie unorientiertes oder orientiertes Polyethylen, Polypropylen, oder Polyvinylchlorid enthält. Die Dicke der auf der COC-Folie lamenierten Folie beträgt von 5 µm bis 150 µm, bevorzugt von 10 µm bis 100 µm, besonders bevorzugt von 20 µm bis 50 µm. Bei der Lamenierung wird bevorzugt ein lösungsmittelfreier Kleber verwendet. Besonders bevorzugt wird ein lösungsmittelfreier Einkomponentenkleber verwendet.

COC wird bevorzugt mit PVC ein- oder beidseitig lameniert. COC und PVC ergeben als Laminat eine gut aussehende flexible, durchstoßfeste Mehrschichtfolie. Weiter weist ein Laminat aus PVC und COC für den Anwender, der ein Pharmablisterhersteller sein kann, den Vorteil auf, daß es bisher nur aus PVC bestehende Packmittel ersetzen kann. Das erfindungsgemäße Laminat aus PVC und COC ist qualitativ hochwertig, weist eine höhere Wasserdampfdichte auf, wobei es den Oberflächenkontakt zum Füllgut über die PVC-Schicht beibehält. Dadurch ist das Zulassungsverfahren vereinfacht.

Die Dicke der Gesamtfolie beträgt von 200 µm bis 550 µm, bevorzugt von 160 µm bis 450 µm und besonders bevorzugt von 20 µm bis 300 µm. Die Dicke der PVC-Folie beträgt von 5 µm bis 150 µm, bevorzugt von 10 µm bis 100 µm und besonders bevorzugt von 20 µm bis 50 µm. Die Dicke der COC-Folie beträgt von 50 µm bis 400 µm, bevorzugt von 150 µm bis 350 µm, besonders bevorzugt von 200 µm bis 300 µm.

Die erfindungsgemäße thermoformbare Verbundfolie wird zur Herstellung von Blisterverpackungen verwendet. Aufgrund der sehr guten Wasserdampfbarriere erhöht die daraus hergestellte Blisterverpackung oder PTP (push through packaging) den Wert des darin verpackten Artikels. Es läßt sich darin Füllgut, wie Arzenimittel und Nahrungsmittel, insbesondere pelletisierte und gekapselte Arzneimittel, reishaltige Eßwaren, Kekse, Snacks, sowie wasseranziehende Artikel, wie Zigaretten und Teebeutel verpacken. Die mindestens einseitig auflaminierte PVC-Folie schützt die COC-Grundfolie gegen Fette, wodurch die Beständigkeit und der Wert des Laminats erhöht wird.

Die Erfindung wird anhand einer Zeichnung und Beispielen näher erläutert.

### Zeichnung

Die Zeichnung enthält Figuren 1 bis 3. Es zeigen:
- Fig 1:: Beschichtungsanlage,
- Fig 2:: Aufbau der Beschichtungsanlage,
- Fig 3:: Antragswerk der Beschichtungsanlage.

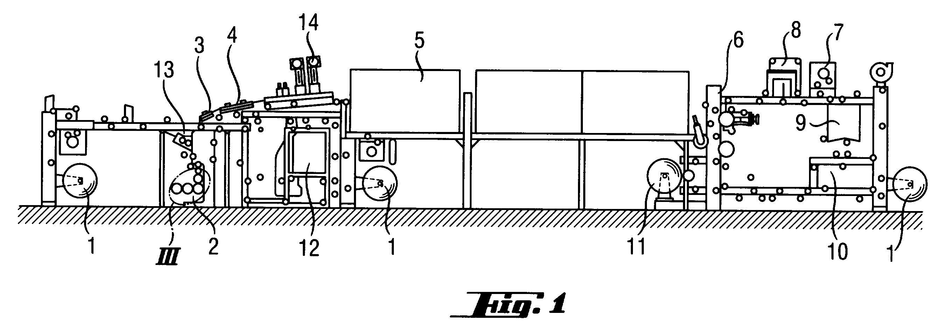

Die Beschichtungsanlage gemäß Fig. 1 enthält eine Abrollung (1), Auftragwerk (2), Infrarotstrahler kurzwellig (3), Infrarotstrahler mittelwellig (4), Schwebetrockner (5), Trockenkaschierstation (6), Coronaanlage (7), Bahnkantenregelung (8), Rückfeuchteeinrichtung (9), Kühlstation (10), Aufrollung (11), Elektronenstrahleinheit (12), Nasskaschierstation (13) und UV-Strahler (14).

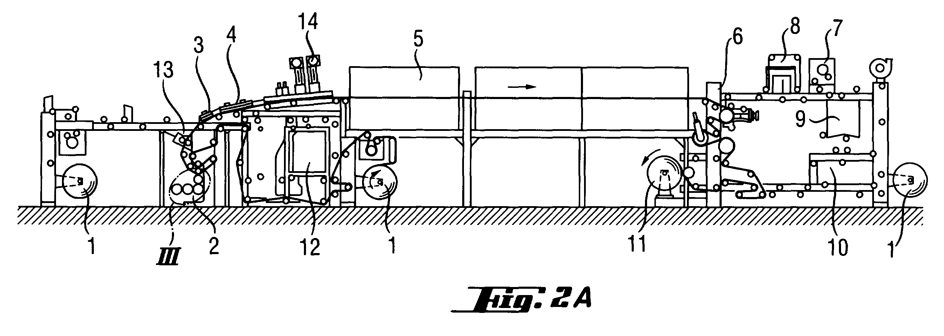

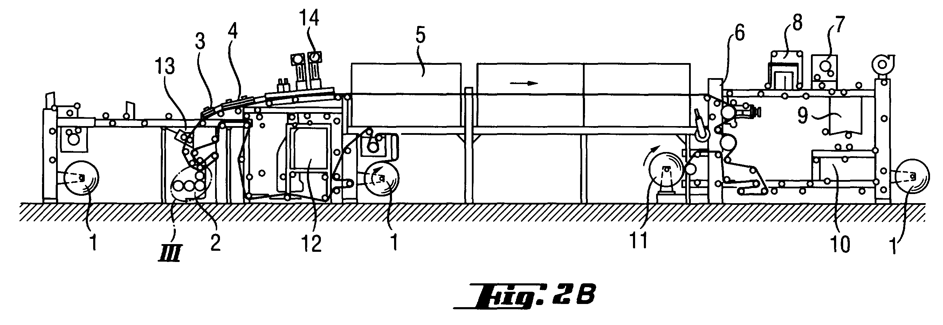

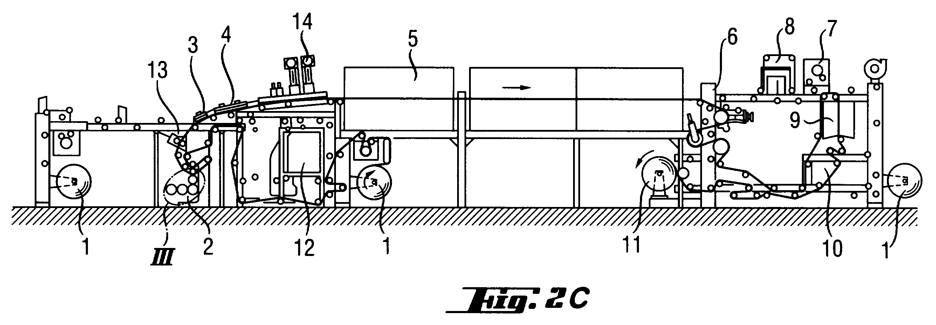

Der Aufbau der Beschichtungsanlage gemäß Fig. 2 zeigt die Abläufe:
A) thermische Trocknung oder UV-Strahlenhärtung,
B) thermische Trocknung mit Schockkühlung,
C) thermische Trocknung mit Rückbefeuchtung,
D) thermische Trocknung mit Trockenkaschierung,
E) thermische Trocknung mit UV-Strahlenhärtung.

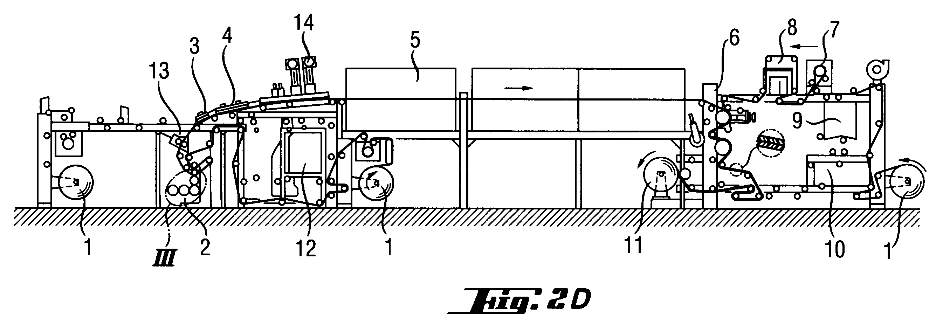

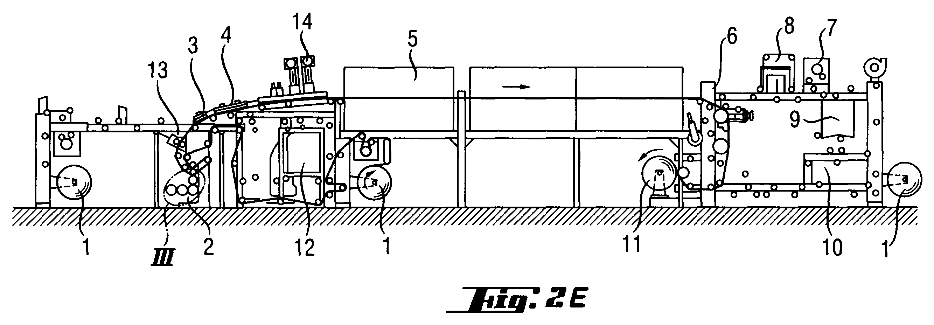

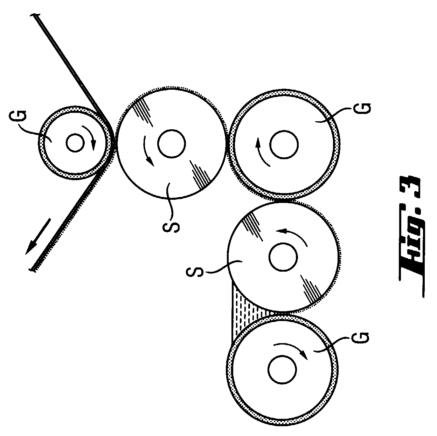

Das Antragswerk der Beschichtungsanlage gemäß Fig 3 zeigt den Glattwalzenauftrag mit 4 Walzen (nass). Dabei bedeuten G = Gummiwalze und S = Stahlwalze. Dabei werden die Walzen geheizt und gekühlt. Der Glattwazenauftrag eignet sich bevorzugt für für die Lamenierung von COC mit PVC oder PVC.

### Beispiele

### Beispiel

Es wurde eine COC-Folie mit einer Dicke von 190 µm (194 g/m²) von beiden Seiten mit einer unorientierten PVC-Folie mit einer Dicke von 35 µm (46 g/m²) mit lösungsmittelfreien Einkomponentenkleber 1K-LF 190X3 der Fa. Herberts GmbH lameniert. Der Antrag betrug 1.50 g/m². Die Corona-Behandlung 48 KW. Die Kaschierung erfolgte bei einer Breite von 810 mm, einer Geschwindigkeit von 50 m/min, einem Glattwalzen-Antragssystem mit vier Walzen und je einem Durchgang pro kaschierte Seite. Die thermoformbare Verbundfolie wies eine Dicke von 260 µm auf. Bei der Messung der Verbundfestigkeit der Verbundfolie führte die hohe Verbundfestigkeit zu einem Abriß der Verbundfolie.

### Vergleichsbeispiel

Es wurde genauso verfahren wie im Beispiel nur mit dem Unterschied, daß die COC-Folie von beiden Seiten mit einer unorientierten Polypropylen-Folie lameniert wurde. Die thermoformbare Verbundfolie wies eine Dicke von 210 µm auf.

## Patentansprüche

1. Thermoformbare Verbundfolie, enthaltend mindestens eine Cycloolefincopolymer enthaltende Folie und mindestens auf einer Seite darauf lamenierte thermoplastische Folie.

2. Thermoformbare Verbundfolie, nach Anspruch 1, erhältlich in dem die auf der Cycloolefincopolymer enthaltenden Folie lamenierte thermoplastische Folie mittels eines lösungsmittelfreien Klebers aufgebracht wird.

3. Thermoformbare Verbundfolie nach Anspruch 1 oder 2, erhältlich in dem die auf der Cycloolefincopolymer enthaltenden Folie lamenierte thermoplastische Folie mittels eines lösungsmittelfreien Einkomponentenklebers aufgebracht wird.

4. Thermoformbare Verbundfolie nach einem oder mehreren der Ansprüche 1 bis 3, enthaltend mindestens eine Cycloolefincopolymer enthaltende Folie und eine mindestens auf einer Seite darauf lamenierte PVC enthaltende thermoplastische Folie.

5. Thermoformbare Verbundfolie nach einem oder mehreren der Ansprüche 1 bis 4, die Dicke der PVC-Folie von 5 µm bis 150 µm und die Dicke der COC-Folie von 50 µm bis 400 µm beträgt.

6. Thermoformbare Verbundfolie nach einem oder mehreren der Ansprüche 1 bis 5, wobei die Dicke der PVC- von 10 µm bis 100 µm und die Dicke der COC-Folie von 100 µm bis 350 µm beträgt.

7. Thermoformbare Verbundfolie nach einem oder mehreren der Ansprüche 1 bis 6, wobei die Dicke der PVC-Folie von 20 µm bis 50 µm und die Dicke der COC-Folie von 150 µm bis 250 µm beträgt.

8. Verfahren zur Herstellung einer thermoformbaren Verbundfolie nach einem oder mehreren der Ansprüche 1 bis 7, wobei die auf der Cycloolefincopolymer enthaltenden Folie lamenierte thermoplastische Folie mittels eines lösungsmittelfreien Klebers aufgebracht wird.

9. Verfahren nach Anspruch 8, wobei die auf der Cycloolefincopolymer enthaltenden Folie lamenierte thermoplastische Folie mittels eines lösungsmittelfreien Einkomponentenklebers aufgebracht wird.

10. Verwendung einer thermoformbaren Verbundfolie nach einem oder mehreren der Ansprüche 1 bis 7 zur Herstellung von Blisterverpackungen.
